# EUROPEAN PATENT APPLICATION

(11) **EP 4 443 035 A1**
(43) Date of publication of application: **09.10.2024**
(21) Application number: 24167466.2
(22) Date of filing: 28.03.2024
(51) Int. Cl.: F16K 27/04

(54) **ADDITIVELY MANUFACTURED SELF-SUPPORTING ASYMMETRIC VALVE CORES**

(30) Priority: 30.03.2023 US 202318193347
(71) Applicant: Hamilton Sundstrand Corporation, Charlotte, NC 28217-4578 (US)
(72) Inventor: Marshall, Travis H., West Hartford, CT 06119 (US)
(74) Representative: Dehns

(57) **Abstract**

An additively manufactured asymmetric self-supporting valve core can include a plurality of valve interfaces (404) and a plurality of valve grooves (402). The valve core can be manufactured such that a major axis of the valve core is oriented within 5 degrees of being perpendicular to a build plate during additive manufacturing. The valve grooves can each include an upper portion (406) and a lower portion (408), where the upper portion is a chamfer and the lower portion is an annular ring. Based on such a design and orientation during manufacturing, the valve core does not require internal support structures, the valve core maintains flow characteristics, and the valve core can have a smooth surface finish without overhanging radii.

## Description

### BACKGROUND

Fuel pumps for aircrafts are traditionally manufactured by molding and machining. Additive manufacturing can be an alternative method of manufacturing fuel pumps. Additive manufacturing methods, however, may be undesirable for fuel pumps and the associated fuel pump parts if there are significant costs associated with additive manufacturing supporting parts and powder removal. Additionally, certain part designs may result in poor surface finish when additively manufactured. Therefore, a design for fuel pumps and associated parts that is cost-effective and conducive to a quality surface finish is desirable.

### SUMMARY

An additively manufactured valve core includes a plurality of valve interfaces and a plurality of valve grooves. The plurality of valve grooves are positioned between each of the plurality of valve interfaces. Each of the plurality of valve grooves includes an upper portion and a lower portion. The upper portion has a chamfered shape with a first diameter at an upper chamfer side and a second diameter at a lower chamfer side. The first diameter at the upper chamfer side is less than the second diameter at the lower chamfer side. The lower portion is an annular ring having the second diameter.

An additively manufactured fuel pump case includes a valve core for a fuel pump case. The valve core includes a plurality of valve interfaces and a plurality of valve grooves. The plurality of valve grooves are positioned between each of the plurality of valve interfaces. Each of the plurality of valve grooves includes an upper portion and a lower portion. The upper portion has a chamfered shape with a first diameter at an upper chamfer side and a second diameter at a lower chamfer side. The fist diameter at the upper chamfer side is less than the second diameter at the lower chamfer side. The lower portion is an annular ring having the second diameter.

A method for additively manufacturing a self supporting valve core includes additively manufacturing a plurality of valve interfaces. The method further includes additively manufacturing an upper portion of a plurality of valve grooves wherein the upper portion has a chamfered shape with a first diameter at an upper chamfer side and a second diameter at a lower chamfer side. The method further includes additively manufacturing a lower portion of the plurality of valve grooves wherein the lower portion is an annular ring having the second diameter.

### BRIEF DESCRIPTION OF THE DRAWINGS

FIG. 1A is a perspective view of a fluid pump case.
FIG. 1B is a perspective view of a fluid pump.
FIG. 2A is a cross sectional view of a prior art embodiment of a valve core.
FIG. 2B is a perspective view of the prior art embodiment of the valve core positioned relative to a build plate.
FIG. 3A is a cross sectional view of a self-supporting asymmetric valve core.
FIG. 3B is a cross sectional view of the self-supporting asymmetric valve core and a build plate for additive manufacturing.
FIG. 4 is a flowchart depicting a method for additively manufacturing the self-supporting asymmetric valve core.

### DETAILED DESCRIPTION

According to the techniques of this disclosure, a valve core can be additively manufactured to be used in a fuel pump case. The valve core can be additively manufactured perpendicular to a build plate such that it is self-supporting, meaning the valve core does not require internal supports to be additively manufactured. The lack of such internal supports mitigates the need for support removal in post-processing procedures. Further, the additively manufactured valve core can have an improved surface finish over prior art designs. The improved surface finish can be accomplished by each valve groove having a chamfered upper portion and an annular lower portion.

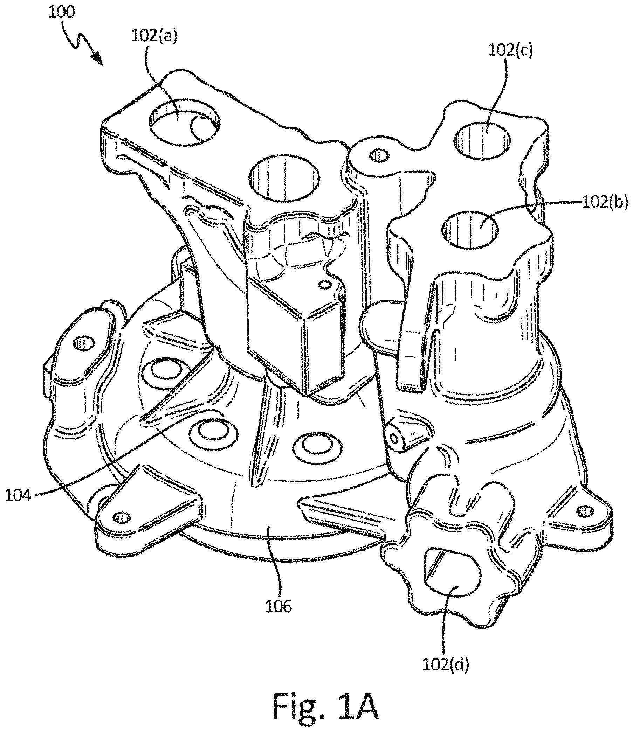

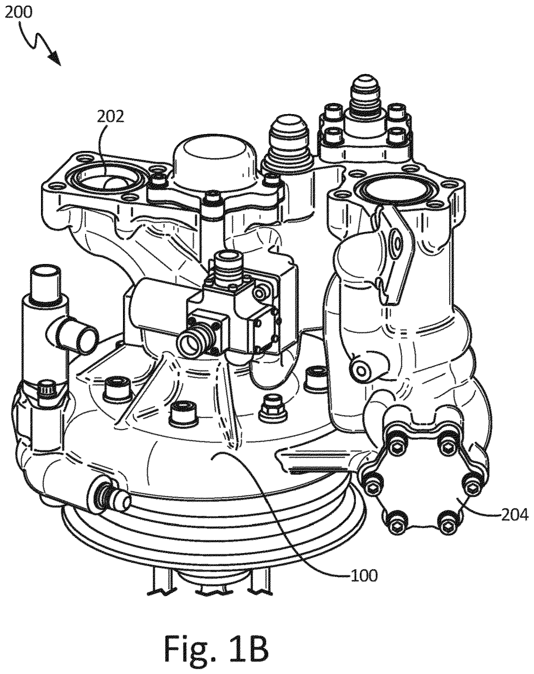

FIG. 1A is a perspective view of fluid pump case 100. FIG. 1B is a perspective view of fluid pump 200, which is assembled using fluid pump case 100 of FIG. 1A. FIGS. 1A and 1B will be discussed together. Fluid pump case 100 includes valve cores 102(a), 102(b), 102(c), and 102(d). Fluid pump case 100 also includes impeller housing section 104 and volute housing section 106. Fluid pump 200 is encased by fluid pump case 100. Fluid pump 200 includes flow inlet 202 and volute outlet 204.

Fluid pump case 100 encases fluid pump 200. Valve cores 102(a), 102(b), 102(c), and 102(d) can each house a valve within fluid pump 200. Valve core 102(a) can house a valve within flow inlet 202. Valve core 102(d) can house a valve within volute outlet 204. Impeller housing section 104 can house an impeller and volute housing section 106 can house a volute, wherein the impeller and the volute are contained within fluid pump 200.

In operation fluid pump 200 can operate as a fuel pump where fuel is received at flow inlet 202 and flows through a valve therein. Fuel can then flow through an impeller (not pictured) to increase pressure relative to the pressure of the fuel flowing through inlet 202. Fuel can then flow through a diffuser ring (not pictured) to further increase the pressure of the fuel. Fuel can then flow through a volute (not pictured) and exit fluid pump 200 through a valve contained within volute outlet 204.

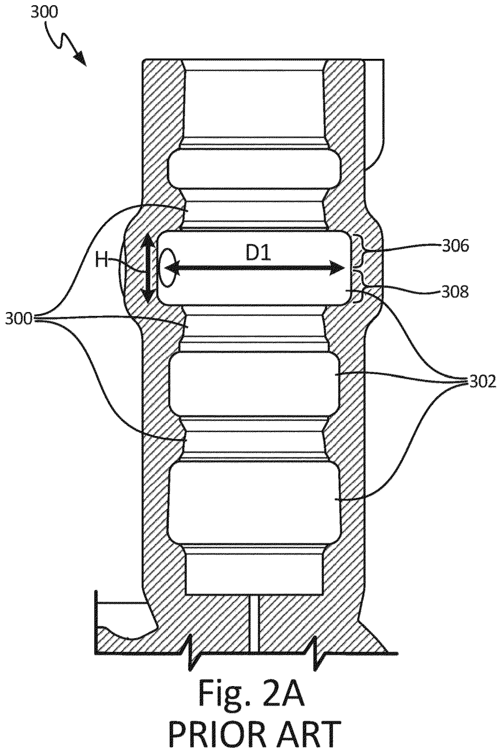

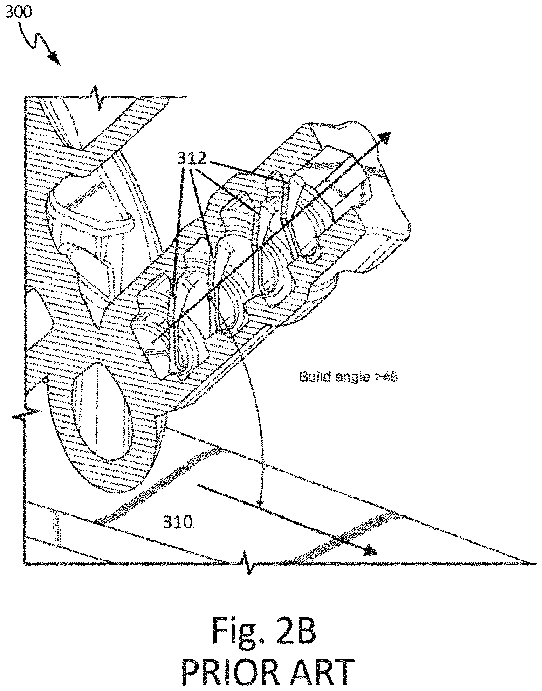

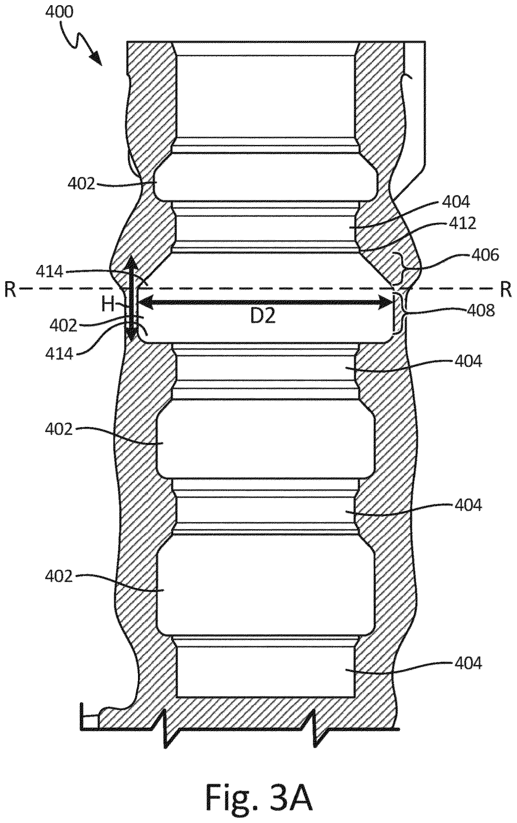

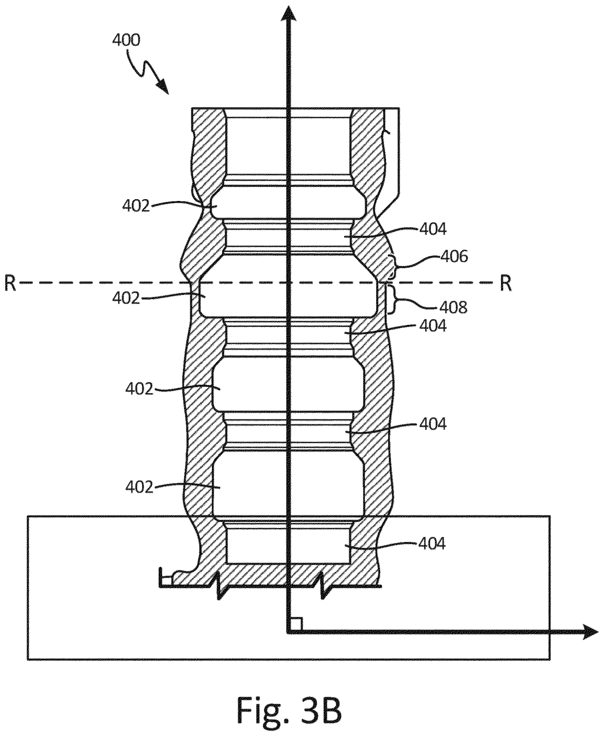

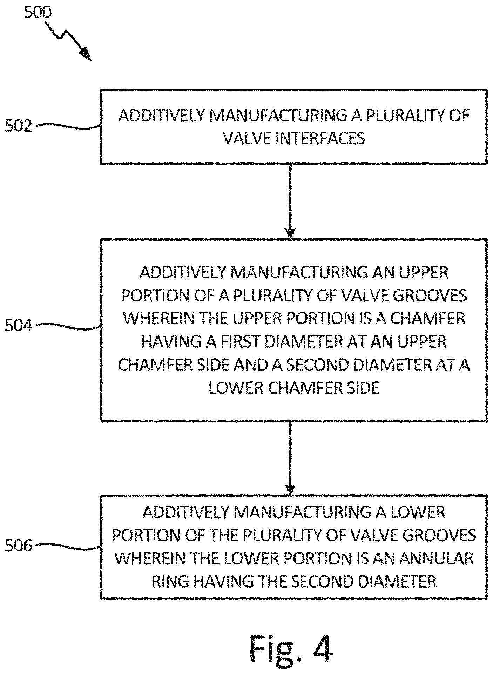

Fluid pump case 100 can be additively manufactured. In a prior art example, such as the example described below with reference to FIGS. 2A and 2B, fluid pump case 100 can be additively manufactured with support structures, including build plate support structures and/or other support structures within fluid pump case 100. In the present disclosure, as described below with reference to FIGS. 3A and 3B, fluid pump case 100 can be additively manufactured without any support structures. In particular, valve cores, such as valve cores 102(a), 102(b), 102(c), and 102(d), can be designed and additively manufactured without a need for built-in support structures. The structure and advantages of such a valve core design will be described below with respect to FIGS. 3 and 4.

FIG. 2A depicts a cross-sectional view of a prior art embodiment of valve core 300. FIG. 2B depicts a perspective view of the prior art embodiment of valve core 300 and the positioning of valve core 300 relative to build plate 310. Valve core 300 can be a part of fluid pump case 100 and can be any of valve cores 102(a), 102(b), 102(c), and/or 102(d) as depicted in FIG. 1A. Valve core 300 includes valve grooves 302 and valve interfaces 304. Each of valve grooves 302 includes a diameter dimension and a height dimension. A height dimension and diameter dimension for one such valve groove is depicted in FIG. 2A, where D₁ represents the diameter dimension and H represents the height dimension. Each of valve grooves 302 includes upper portion 306 and lower portion 308. In the depicted prior art valve core 300, upper portion 306 and lower portion 308 are symmetrical sides of valve grooves 302. Valve core 300 can also have support structures 312, which are built in during the additive manufacturing process.

Valve core 300 can be additively manufactured as part of fluid pump case 100. Valve grooves 302 are integrally connected to valve interfaces 304. Support structures 312 can be integrally formed and extend from a lower position of valve core 300, to a higher position of valve core 300, wherein the lower and higher positions are relative to build plate 310. In a post-additive manufacturing process, valve interfaces 304 can be milled via machining to produce a smooth finish. Additionally, support structures 312 can be removed via machining such that the final valve core 300 within fluid pump case 100 does not contain any support structures. In some embodiments, a valve can then be inserted into the valve core for operation within a fluid pump, such as fluid pump 200.

FIG. 3A depicts a cross sectional view of self-supporting asymmetric valve core 400. FIG. 3B depicts a cross sectional view of self-supporting asymmetric valve core 400 and its position relative to build plate 410. Self-support asymmetric valve core 400 can be a part of fluid pump case 100 and can be any of valve cores 102(a), 102(b), 102(c), and/or 102(d) as depicted in FIG. 1A. Self-supporting asymmetric valve core 400 includes valve grooves 402 and valve interfaces 404. Valve grooves 402 are positioned between each of the plurality of valve interfaces 404. Each of valve grooves 402 includes a diameter dimension and a height dimension. A height dimension and diameter dimension for one such valve groove is depicted in FIG. 3A, where D₂ represents the diameter dimension and H represents the height dimension. The height dimension H of the present disclosure depicted in FIG. 3A can be the same as the height dimension H of the prior art example depicted in FIG. 2A. Conversely, the diameter dimension D₂ of the present disclosure depicted in FIG. 3A can be distinct from the diameter dimension D₁ of the prior art example depicted in FIG. 2A.

In FIG. 3A, each of valve grooves 402 includes upper portion 406 and lower portion 408. Upper portion 406 of each of valve grooves 402 is a chamfer and lower portion 408 of each of valve grooves 402 is an annular ring. The chamfer of upper portion 406 is shaped such that the chamfer has a trapezoidal axial cross-section. The chamfer of upper portion 406 and the annular ring of lower portion 408 are integrally formed. Upper portion 406 has first diameter 412 at an upper chamfer side where upper portion 406 contacts valve interface 404. Upper portion 406 has a second diameter 414 at a lower chamfer side, where upper portion 406 contacts lower portion 408. Lower portion 408 also has the second diameter 414, which is the diameter of the annular ring of lower portion 408. The second diameter 414 is greater than the first diameter 412 due to the chamfered shape of upper portion 406. The second diameter 414 applies both to the lower chamfer side and to the annular ring of lower portion 408 because the chamfer of upper portion 406 and the annular ring of lower portion 408 are integrally formed.

In the depicted embodiment, a cross-section of each of valve grooves 402 taken in a radial direction is asymmetric. For example, a cross-section taken across the depicted R-axis results in an asymmetric cross section based on the differing shapes of the chamfered upper portion 406 and the annular ring of lower portion 408.

Self-supporting asymmetric valve core 400 is manufactured without the need of internal support structure due to the orientation during additive manufacturing, thus distinguishing the embodiment of FIG. 3A from that of FIGS. 2A and 2B. In the additive manufacturing process, valve core 400 can be manufactured on build plate 410. Valve core 400 can be additively manufactured in a vertical orientation such that a major axis of valve core 400 is perpendicular to build plate 410. In other embodiments, valve core 400 is additively manufactured such that the major axis of valve core 400 can be within 5 degrees of being perpendicular to build plate 410 during the additive manufacturing process. Thus, for example, the major axis of valve core 400 can be between 85 degrees and 95 degrees with respect to the surface of build plate 410.

The build direction of valve core 400 is such that lower portion 408 is closer to the build plate than upper portion 406 for each of valve grooves 402. Thus, during the build process, lower portion 408 is additively manufactured before upper portion 406 is additively manufactured for each of valve grooves 402 as valve core 400 is manufactured in a vertical direction from the base of build plate 410.

The embodiment depicted in FIGS. 3A and 3B provide various advantages. The vertical orientation of valve core 400 relative to build plate 410 allows for valve core 400 to be additively manufactured without any internal support structures. This removes costs associated with additional build time and material that would otherwise be necessary to build in the support structures in addition to the existing parts of valve core 400. Further, costs associated with post-additive manufacturing machining in order to remove the support structures are mitigated. The risk of Foreign Object Debris (FOD) arising from support removal is also decreased, thereby reducing inspection costs that may otherwise be necessary.

As an additional advantage, the chamfered shape of upper portion 406 mitigates the need for an overhanging radius. An overhanging radius in additive manufacturing may lead to poor surface finish of the manufactured product and increased defect rates. The overhanging radius can further lead to build failure. Thus, the chamfered shape of upper portion 406 allows for an improved surface finish and lower defect rates and build failures over prior art designs. In addition to the improved surface finish, the chamfered shape of upper portion 406 and the annular ring of lower portion 408 maintain desirable flow performance. Valve core 400 maintains such performance by retaining the height dimension H of the prior art design, while varying the diameter dimension as depicted by D₁ and D₂ in FIGS. 2A and 3A. The maintained height H allows for the dimensions of the internal valve housed within valve core 400 to remain the same as the internal valve housed within prior art valve core 300. As the internal valve dimensions can remain the same, the disclosed design of valve core 400 does not require any redesign of existing internal valves. Thus, a chamfered shape can be additively manufactured for upper portion 406, allowing for a better surface finish, while still maintaining flow performance by maintaining the height dimension and varying the diameter dimension.

FIG. 4 is a flowchart depicting method for additively manufacturing the self-supporting asymmetric valve core 500. Method 500 begins at step 502 with additively manufacturing a plurality of valve interfaces. At step 502, the upper portion of the plurality of valve grooves is additively manufactured. The upper portion is additively manufactured with a chamfered shape with a first diameter at an upper chamfer side and a second diameter at a lower chamfer side. At step 504, the lower portion of the plurality of valve grooves is additively manufactured. The lower portion is an annular ring having the second diameter.

The additively manufactured plurality of valve grooves made by the method 500 have an asymmetric cross-section when the cross-section is taken in a radial direction. During additive manufacturing, method 500 can further include orienting the valve core such that a major axis of the valve core is perpendicular to the build plate. In another embodiment, during additive manufacturing, method 500 can further include orienting the valve core such that a major axis of the valve core is within 5 degrees of being perpendicular to the build plate.

The additively manufactured plurality of valve grooves can be additively manufactured such that the lower portion of each of the plurality of valve grooves is closer to the build plate than the upper portion of each of the plurality of valve grooves. Further, the upper portion and the lower portion can be additively manufactured such that they are integrally formed.

The techniques of this disclosure demonstrate the advantages of an additively manufactured self-supporting valve core for a fuel pump case. As described above, the valve core can be additively manufactured in a perpendicular orientation relative to a build plate. This orientation allows for a self-supporting design that does not require internal support structures within the valve core, and allows for an improved surface finish with a chamfered upper portion of each of a plurality of valve grooves contained within the valve core. The improved design allows for use of existing internal valves, thus mitigating the need for valve redesign, while still maintaining the advantage of a self-supporting architecture.

### Discussion of Possible Embodiments

The following are non-exclusive descriptions of possible embodiments of the present invention.

An additively manufactured valve core includes a plurality of valve interfaces and a plurality of valve grooves. The plurality of valve grooves are positioned between each of the plurality of valve interfaces. Each of the plurality of valve grooves includes an upper portion and a lower portion. The upper portion has a chamfered shape with a first diameter at an upper chamfer side and a second diameter at a lower chamfer side. The first diameter at the upper chamfer side is less than the second diameter at the lower chamfer side. The lower portion is an annular ring having the second diameter.

The additively manufactured valve core of the preceding paragraph can optionally include, additionally and/or alternatively, any one or more of the following features, configurations and/or additional components:

A further embodiment of the foregoing additively manufactured valve core, wherein a cross-section of each of the plurality of valve grooves taken in a radial direction is asymmetric.

A further embodiment of the foregoing additively manufactured valve core, wherein the valve core is additively manufactured such that a major axis of the valve core is perpendicular to a build plate.

A further embodiment of the foregoing additively manufactured valve core, wherein the valve core is additively manufactured such that the lower portion of each of the plurality of valve grooves is closer to the build plate than the upper portion of each of the plurality of valve grooves.

A further embodiment of the foregoing additively manufactured valve core, wherein the valve core is additively manufactured such that a major axis of the valve core is within 5 degrees of being perpendicular to a build plate.

A further embodiment of the foregoing additively manufactured valve core, wherein the upper portion and the lower portion of each of the plurality of valve grooves are integrally formed.

A further embodiment of the foregoing additively manufactured valve core, wherein the chamfered shape of the upper portion has a trapezoidal axial cross-section.

An additively manufactured fuel pump case includes a valve core for a fuel pump case. The valve core includes a plurality of valve interfaces and a plurality of valve grooves. The plurality of valve grooves are positioned between each of the plurality of valve interfaces. Each of the plurality of valve grooves includes an upper portion and a lower portion. The upper portion has a chamfered shape with a first diameter at an upper chamfer side and a second diameter at a lower chamfer side. The fist diameter at the upper chamfer side is less than the second diameter at the lower chamfer side. The lower portion is an annular ring having the second diameter.

The additively manufactured fuel pump case of the preceding paragraph can optionally include, additionally and/or alternatively, any one or more of the following features, configurations and/or additional components:

A further embodiment of the foregoing additively manufactured fuel pump case, wherein a cross-section of each of the plurality of valve grooves taken in a radial direction is asymmetric.

A further embodiment of the foregoing additively manufactured fuel pump case, wherein the valve core is additively manufactured such that a major axis of the valve core is perpendicular to a build plate.

A further embodiment of the foregoing additively manufactured fuel pump case, wherein the valve core is additively manufactured such that the lower portion of each of the plurality of valve grooves is closer to the build plate than the upper portion of each of the plurality of valve grooves.

A further embodiment of the foregoing additively manufactured fuel pump case, wherein the valve core is additively manufactured such that a major axis of the valve core is within 5 degrees of being perpendicular to a build plate.

A further embodiment of the foregoing additively manufactured fuel pump case, wherein the upper portion and the lower portion of each of the plurality of valve grooves are integrally formed.

A further embodiment of the foregoing additively manufactured fuel pump case, wherein the chamfered shape of the upper portion has a trapezoidal axial cross-section.

A method for additively manufacturing a valve core includes additively manufacturing a plurality of valve interfaces. The method further includes additively manufacturing an upper portion of a plurality of valve grooves wherein the upper portion has a chamfered shape with a first diameter at an upper chamfer side and a second diameter at a lower chamfer side. The method further includes additively manufacturing a lower portion of the plurality of valve grooves wherein the lower portion is an annular ring having the second diameter.

A further embodiment of the foregoing method, wherein the plurality of valve grooves are additively manufactured such that a cross-section of each of the plurality of valve grooves taken in a radial direction is asymmetric.

A further embodiment of the foregoing method, further comprising orienting the valve core in a self-supporting orientation such that a major axis of the valve core is perpendicular to a build plate.

A further embodiment of the foregoing method, wherein the valve core is additively manufactured such that the lower portion of each of the plurality of valve grooves is closer to the build plate than the upper portion of each of the plurality of valve grooves.

A further embodiment of the foregoing method, further comprising orienting the valve core such that a major axis of the valve core is within 5 degrees of being perpendicular to a build plate.

A further embodiment of the foregoing method, wherein the plurality of valve grooves are additively manufactured such that the upper portion and the lower portion of each of the plurality of valve grooves are integrally formed.

While the invention has been described with reference to an exemplary embodiment(s), it will be understood by those skilled in the art that various changes may be made without departing from the scope of the invention as defined by the claims. In addition, many modifications may be made to adapt a particular situation or material to the teachings of the invention without departing from the scope of the claims. Therefore, it is intended that the invention not be limited to the particular embodiment(s) disclosed, but that the invention will include all embodiments falling within the scope of the appended claims.

## Claims

1. An additively manufactured valve core, comprising:
a plurality of valve interfaces (404); and
a plurality of valve grooves (402) positioned between each of the plurality of valve interfaces, each of the plurality of valve grooves comprising an upper portion (406) and a lower portion (408), wherein:
the upper portion has a chamfered shape with a first diameter at an upper chamfer side and a second diameter at a lower chamfer side;
the first diameter at the upper chamfer side is less than the second diameter at the lower chamfer side; and
the lower portion is an annular ring having the second diameter.

2. The valve core of claim 1, wherein a cross-section of each of the plurality of valve grooves taken in a radial direction is asymmetric.

3. The valve core of claim 1 or 2, wherein the valve core is additively manufactured such that a major axis of the valve core is perpendicular to a build plate.

4. The valve core of claim 3, wherein the valve core is additively manufactured such that the lower portion of each of the plurality of valve grooves is closer to the build plate than the upper portion of each of the plurality of valve grooves.

5. The valve core of claim 1 or 2, wherein the valve core is additively manufactured such that a major axis of the valve core is within 5 degrees of being perpendicular to a build plate.

6. The valve core of any preceding claim, wherein the upper portion and the lower portion of each of the plurality of valve grooves are integrally formed.

7. The valve core of any preceding claim, wherein the chamfered shape of the upper portion has a trapezoidal axial cross-section.

8. An additively manufactured fuel pump case, comprising:
a valve core as claimed in any preceding claim for a fuel pump case.

9. A method for additively manufacturing a valve core, comprising:
additively manufacturing a plurality of valve interfaces;
additively manufacturing an upper portion of a plurality of valve grooves wherein the upper portion has a chamfered shape with a first diameter at an upper chamfer side and a second diameter at a lower chamfer side; and
additively manufacturing a lower portion of the plurality of valve grooves wherein the lower portion is an annular ring having the second diameter.

10. The method of claim 9, wherein the plurality of valve grooves are additively manufactured such that a cross-section of each of the plurality of valve grooves taken in a radial direction is asymmetric.

11. The method of claim 9 or 10, further comprising orienting the valve core in a self-supporting orientation such that a major axis of the valve core is perpendicular to a build plate.

12. The method of claim 11, wherein the valve core is additively manufactured such that the lower portion of each of the plurality of valve grooves is closer to the build plate than the upper portion of each of the plurality of valve grooves.

13. The method of any of claims 9 to 12, further comprising orienting the valve core such that a maj or axis of the valve core is within 5 degrees of being perpendicular to a build plate.

14. The method of any of claims 9 to 12, wherein the plurality of valve grooves are additively manufactured such that the upper portion and the lower portion of each of the plurality of valve grooves are integrally formed.
